# EUROPEAN PATENT SPECIFICATION

(11) **EP 2 855 230 B1**
(45) Date of publication and mention of the grant of the patent: **09.10.2019**
(21) Application number: 13800691.1
(22) Date of filing: 03.06.2013
(51) Int. Cl.: B61F 3/02, B61F 5/22, B61D 3/10, B61D 13/00, B61G 5/02

(54) **RAIL VEHICLE**
SCHIENENFAHRZEUG
VÉHICULE FERROVIAIRE

(30) Priority: 04.06.2012 FI 20125604
(43) Date of publication of application: 08.04.2015
(73) Proprietor: Helsingin kaupungin liikenneliikelaitos, 00099 Helsingin kaupunki (FI)
(72) Inventor: HEIKKILÄ, Ollipekka, 00099 Helsingin kaupunki (FI)
(74) Representative: Kolster Oy Ab
(86) International application number: PCT/FI2013/050596
(87) International publication number: WO 2013/182746

(56) References cited:
- EP-A1- 0 692 421
- EP-A1- 0 915 000
- EP-A1- 1 074 448
- EP-A2- 1 741 610
- WO-A1-95/34435
- FR-A1- 2 549 436
- US-A- 5 036 774
- US-A1- 2001 052 305
- US-B1- 6 167 814

## Description

### Background of the invention

The invention relates to a rail vehicle, a low-floor tram in particular, comprising a connecting car connected between two car units and supporting these car units and being supported on a bogie unit of its own.

Tram solutions are known wherein all cars with bogies are provided with fixed bogies that do not turn with respect to a car or that are only slightly flexible in a direction of rotation (henceforth "fixed bogie"), which results in high lateral accelerations of single cars.

In some trams, a central car section (the connecting car) is provided with one fixed bogie and the car units connected thereto are each provided with a bogie allowed to pivot around one fulcrum.

Solutions are also used wherein all bogies are bogies pivoting around one fulcrum so that the connecting car is provided with two bogies while end cars are each provided with one bogie. The problem with this is the limited length of the cars and the large number of bogies with respect to the length of the combination.

A structure has also been implemented which has two bogies with two fulcrums, wherein consecutively connected cars are allowed to pivot on said fulcrums, the ends of the combination being provided with bogies pivoting around one fulcrum.

Hybrid structures also exist with for instance two fixed bogies and a combination of various bogies which have one fulcrum and are located higher than other bogies, in which case the problem is the plurality of bogies of various types and stair structures in a passenger cabin necessitated by the bogies.

Some of the above-described bogies interconnecting the cars are bogies which in connection with rail vehicles are called Jacob-type bogies on which the consecutive cars are supported and articulated. A Jacob-type bogie may be fastened directly to the interconnected cars through separate fulcrums or through an intermediate body (a connecting car or an articulated section) articulating the cars with one another so that the bogie pivots around one fulcrum only. In each of the above-mentioned situations the bogie structure, including the bellows sealing the car body parts together, requires a lot of space in a vertical direction.

A Jacob-type bogie pivoting around one fulcrum would be advantageous also in a low-floor tram but so far it has been impossible to implement it therein in an appropriate manner.

Document EP 1 074 448 A1 discloses a track-bound vehicle, especially railway vehicle for regional transport, the vehicle having at least three coupled wagon boxes horizontally rotatably supported on a corresponding running gear. A control system controls the rotation angle of the last wagon box relative to its associated running gear depending on that of the first wagon box.

### SUMMARY OF THE INVENTION

An object of the invention is thus to solve the problems described above. This object is achieved by the rail vehicle according to the invention, which is mainly characterized in that the connecting car is supported on its bogie unit such that it pivots substantially freely around one fulcrum in a horizontal plane, and equipment is arranged between the connecting car and the car units connected thereto for keeping horizontal turning angles between both connected car units and the connecting car almost equal in magnitude.

Preferably, the equipment for keeping the turning angles almost equal in magnitude consists of a lever mechanism comprising a first bar articulatedly connected to one car unit, a second bar articulatedly connected to another car unit, and an idler pivotally mounted to the connecting car, the first bar and the second bar being articulated on opposite sides of a fulcrum of the idler at selected distances from the fulcrum, and whereby the first bar and the second bar as well as the idler are with respect to a longitudinal vertical centre plane of the rail vehicle located on the same side of the rail vehicle.

The above-mentioned preferred embodiment of the invention is thus based on installing the lever mechanism such that it divides the angles of two long car modules and a short connecting car module mounted therebetween on a bogie pivoting freely around one fulcrum into angles of equal magnitudes. The mechanism may be a so-called Watt mechanism, for instance.

The equipment for keeping said turning angles equal in magnitude may also be implemented in another manner mechanically, hydraulically, pneumatically, electromechanically, etc. The main thing is that it keeps the horizontal angles of the connecting car freely pivoting on its bogie equal in magnitude with respect to the car units in front of and behind it.

These and other preferred embodiments of the invention are disclosed in the dependent claims.

As compared with the use of a bogie structure with two fulcrums and the use of a non-pivoting bogie structure, the solution related to the use of the bogie structure with one fulcrum according to the invention enables smaller lateral forces and lateral accelerations both in the bogie structure and in the actual car structure to be achieved. The smaller lateral forces and lateral accelerations enable a lighter and longer lasting car and bogie structure, which means considerable savings in manufacturing, maintenance and energy costs. Moreover, the smaller lateral forces of wheels reduce wear and tear of a wheel ring flange and railway curves, which means considerable savings in maintenance costs. At the same time, the risk of derailment is reduced and passenger comfort increases. By providing the rail vehicle with bogies of the same type throughout, cost savings in design, manufacturing and spare part costs as well as in car and railway track maintenance costs are achieved. The invention also enables the railway track to be built in a smaller street space since owing to the turning bogies, a less extensive transition curve (clothoid) will suffice before the actual railway curve.

### List of figures

The invention is now described in closer detail by means of some preferred embodiments and with reference to the accompanying drawings, in which
Figure 1 shows a tram provided with two car units and one connecting car therebetween;
Figure 2 shows the tram according to Figure 1 in a curve;
Figure 3 shows a tram wherein a car unit with no bogie is supported between two connecting cars and car units with bogies are connected to other ends of the connecting cars;
Figure 4 shows a tram wherein two car units provided with bogies are connected to both sides of a connecting car; and
Figure 5 shows a modification of the tram according to Figure 1.

### Detailed description of the invention

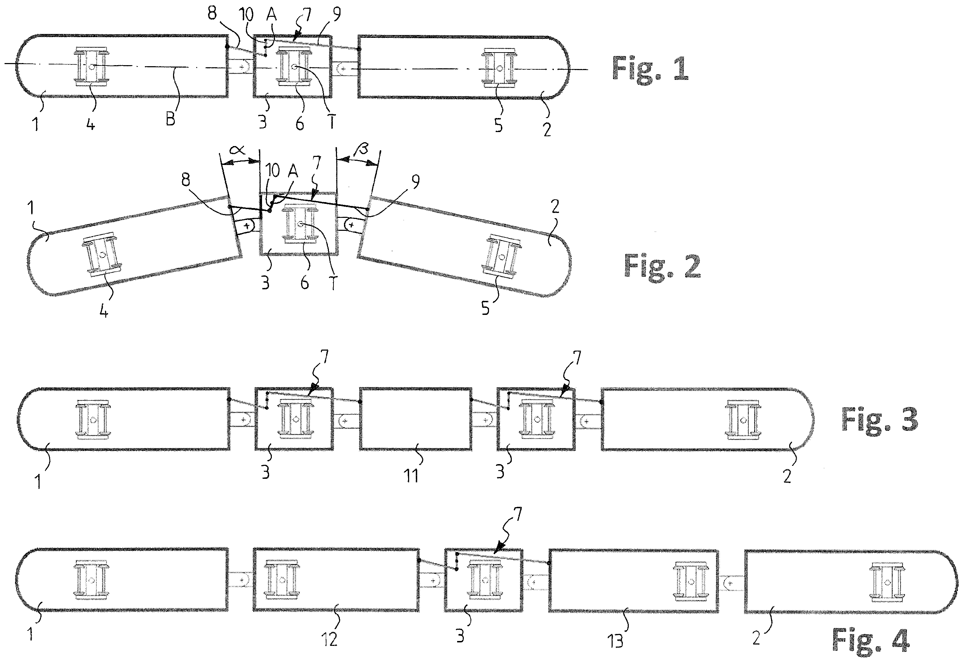

Figures 1 and 2 show a low-floor tram comprising two car units 1 and 2 and, connected therebetween, a connecting car 3 supporting these car units. The car units 1 and 2 are provided with bogies 4 and 5, and the connecting car 3 is provided with a bogie 6 on which the connecting car 3 is supported by its middle such that it pivots around one fulcrum T substantially freely in a horizontal plane. In addition, between the connecting car 3 and the car units 1 and 2 connected thereto, equipment 7 is arranged for keeping horizontal turning angles α and β between the both connected car units 1 and 2 and the connecting car 3 almost equal in magnitude.

The equipment for keeping the turning angles α and β equal in magnitude consists of a lever mechanism 7 comprising a first bar 8 articulatedly connected to one car unit 1, a second bar 9 articulatedly connected to the the other car unit 2, and an idler 10 which, in this example, is turnably pivotally mounted in a horizontal plane (may, of course, also be in a vertical plane) to the connecting car 3, the first bar 8 and the second bar 9 being articulated on opposite sides of a fulcrum A of the idler at selected distances from the fulcrum A, and whereby the first bar 8 and the second bar 9 as well as the idler 10 are with respect to a longitudinal vertical centre plane B of the rail vehicle located on the same side of the rail vehicle. In this example, the first bar 8 and the second bar 9 differ in length, and the idler 10 is pivotally mounted on one side of the fulcrum of the bogie 6 of the connecting car 3, as seen in a longitudinal direction of the connecting car 3. The lever mechanism 7 may be fastened to underside structures of the cars 1, 2, and 3, for instance. Of course, the lever mechanism could also be constructed such that the first bar 8 and the second bar 9 were equal in length and the idler 10 were pivotally mounted next to the fulcrum of the bogie 6 of the connecting car 3, as seen in a sideward direction.

It can be seen in Figure 2 how the lever mechanism 7 keeps the angle α between the car unit 1 and the connecting car 3 as well as the angle β between the car unit 2 and the connecting car 3 equal in magnitude in a curve drive situation, enabling the above-described considerable advantages over the prior art to be achieved.

Figure 3 shows another tram embodiment according to the invention, wherein a car unit 11 with no bogie is supported between two connecting cars 3 while the other ends of the connecting cars 3 are connected to cars 1 and 2 provided with bogies and corresponding to the car units of Figures 1 and 2. The lever mechanisms 7 between the connecting cars 3 and the car units 1, 2, and 11 correspond to the lever mechanisms shown in Figures 1 and 2 and, of course, guide the turning angles between the cars 1, 2, 3, and 11 as in Figures 1 and 2.

Figure 4 shows yet another tram embodiment according to the invention, wherein two car units 1, 12 and 2, 13, provided with bogies, are connected on each side of the connecting car 3, in which case the end cars 1 and 2 are similar to those shown in the previous figures.

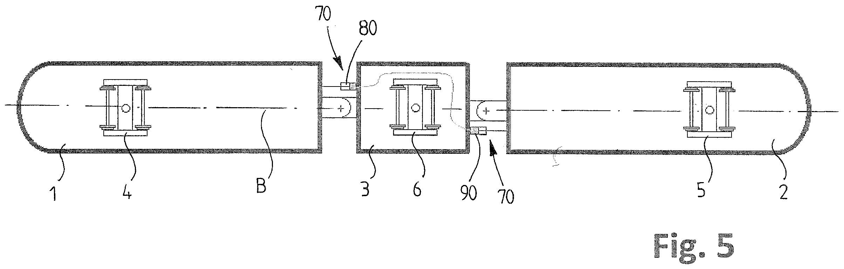

The equipment for keeping said turning angles α and β almost equal in magnitude may also be implemented in a manner other than by means of the lever mechanism 7 described above. One such example is shown in Figure 5 wherein equipment 70 for keeping the turning angles equal in magnitude comprises hydraulic or pneumatic cylinders 80 and 90 installed between the connecting car 3 and the car units 1 and 2 connected thereto, whereby the cylinder 80 located in front of the connecting car 3 and the cylinder 90 located at the back of the connecting car 3 reside on opposite sides of the longitudinal vertical centre plane B of the rail vehicle. In place of the cylinders 80 and 90, an electromechanical arrangement could also be provided, as one of many alternative implementations for controlling the turning angles in a controlled manner. More cylinders 80 and 90 may also be provided on both sides in order to ensure operation.

The above description of the invention is only intended to illustrate the basic idea according to the invention. A person skilled in the art may thus vary its details within the scope of the accompanying claims. Thus, for instance, the number of interconnected cars may vary as necessary and differ from the above-described alternatives within the limits set by the invention. The invention may also be applied to rail vehicles other than trams, such as to high speed tram equipment.

## Claims

1. A rail vehicle, a low-floor tram in particular, comprising a connecting car (3) connected between two car units (1, 2, 11, 12, 13) and supporting these car units and being supported on a bogie unit (6) of its own, **characterized in that** the connecting car (3) is supported on its bogie unit (6) such that it pivots substantially freely around one fulcrum (T) in a horizontal plane, and equipment (7; 70) is arranged between the connecting car (3) and the car units (1, 2, 11, 12, 13) connected thereto for keeping horizontal turning angles (α, β) between both connected car units (1, 2, 11, 12, 13) and the connecting car (3) almost equal in magnitude.

2. A rail vehicle as claimed in claim 1, **characterized in that** the equipment for keeping the turning angles (α, β) almost equal in magnitude consists of a lever mechanism (7) comprising a first bar (8) articulatedly connected to one car unit (1, 11, 12), a second bar (9) articulatedly connected to another car unit (2, 11, 13), and an idler (10) pivotally mounted to the connecting car (3), the first bar (8) and the second bar (9) being articulated on opposite sides of a fulcrum (A) of the idler at selected distances from the fulcrum (A), and whereby the first bar (8) and the second bar (9) as well as the idler (10) are with respect to a longitudinal vertical centre plane (B) of the rail vehicle located on the same side of the rail vehicle.

3. A rail vehicle as claimed in claim 2, **characterized in that** the first bar (8) and the second bar (9) differ in length, and that the idler (10) is pivotally mounted on a front or back side of a fulcrum of the bogie unit (6) of the connecting car (3).

4. A rail vehicle as claimed in claim 2, **characterized in that** the first bar and the second bar are equal in length, and that the idler (10) is pivotally mounted next to the fulcrum of the bogie unit (6) of the connecting car (3).

5. A rail vehicle as claimed in claim 1, **characterized in that** the equipment for keeping the turning angles (α, β) almost equal in magnitude comprises hydraulic or pneumatic cylinders (80, 90) installed between the connecting car (3) and the car units (1, 2) connected thereto, whereby at least one cylinder (80) located on one side of the connecting car and at least one cylinder (90) located on the other side of the connecting car (3) reside on opposite sides of the longitudinal vertical centre plane (B) of the rail vehicle.

6. A rail vehicle as claimed in claim 1, **characterized in that** the equipment for keeping the turning angles (α, β) almost equal in magnitude comprises electromechanical mechanisms installed between the connecting car (3) and the car units (1, 2, 11, 12, 13) connected thereto, whereby a mechanism located on one side of the connecting car (3) and a mechanism located on the other side of the connecting car (3) reside on opposite sides of the longitudinal vertical centre plane (B) of the rail vehicle.

7. A rail vehicle as claimed in any one of the preceding claims, **characterized in that** car units without bogies are supported on both sides of the connecting car (3) and car units with bogies are connected to the car units without bogies.

8. A rail vehicle as claimed in any one of claims 1 to 6, **characterized in that** the connecting car (3) is connected to the car units (1, 2, 12, 13) provided with bogies (4, 5).

9. A rail vehicle as claimed in any one of claims 1 to 6, **charac- terized** in that between two connecting cars (3), a car unit (11) without a bogie is supported and the other ends of the connecting cars are connected to car units (1, 2) with bogies and, after these, possibly more car units with and/or without bogies.

## Patentansprüche

1. Schienenfahrzeug, insbesondere eine Niederflurstraßenbahn, das einen Verbindungswagen (3) umfasst, der zwischen zwei Wageneinheiten (1, 2, 11, 12, 13) verbunden ist und diese Wageneinheiten stützt und auf einer eigenen Drehgestelleinheit (6) gestützt ist, **dadurch gekennzeichnet, dass** der Verbindungswagen (3) auf seiner Drehgestelleinheit (6) derart gestützt ist, dass er in einer horizontalen Ebene im Wesentlichen frei um einen Drehpunkt (T) schwenkt, und eine Ausrüstung (7; 70) zum Halten von horizontalen Drehwinkeln (α, β) sowohl zwischen den verbundenen Wageneinheiten (1, 2, 11, 12, 13) als auch dem Verbindungswagen (3) in fast gleicher Größe zwischen dem Verbindungswagen (3) und den Wageneinheiten (1, 2, 11, 12, 13), die damit verbunden sind, angeordnet ist.

2. Schienenfahrzeug nach Anspruch 1, **dadurch gekennzeichnet, dass** die Ausrüstung zum Halten der Drehwinkel (α, β) in fast gleicher Größe aus einem Hebelmechanismus (7), der eine erste Stange (8), die gelenkig mit einer Wageneinheit (1, 11, 12) verbunden ist, und eine zweite Stange (9), die gelenkig mit einer anderen Wageneinheit (2, 11, 13) verbunden ist, und ein Leitrad (10), das schwenkbar am Verbindungswagen (3) montiert ist, besteht, wobei die erste Stange (8) und die zweite Stange (9) auf gegenüberliegenden Seiten des Drehpunkts (A) des Leitrads in ausgewählten Abständen vom Drehpunkt (A) angelenkt sind und wodurch die erste Stange (8) und die zweite Stange (9) sowie das Leitrad (10) mit Bezug auf eine vertikale zentrale Längsebene (B) des Schienenfahrzeugs auf derselben Seite des Schienenfahrzeugs positioniert sind.

3. Schienenfahrzeug nach Anspruch 2, **dadurch gekennzeichnet, dass** die erste Stange (8) und die zweite Stange (9) von unterschiedlicher Länge sind und dass das Leitrad (10) auf einer Vorder- oder einer Rückseite eines Drehpunkts der Drehgestelleinheit (6) des Verbindungswagens (3) schwenkbar montiert ist.

4. Schienenfahrzeug nach Anspruch 2, **dadurch gekennzeichnet, dass** die erste Stange und die zweite Stange von gleicher Länge sind und dass das Leitrad (10) neben dem Drehpunkt der Drehgestelleinheit (6) des Verbindungswagens (3) schwenkbar montiert ist.

5. Schienenfahrzeug nach Anspruch 1, **dadurch gekennzeichnet, dass** die Ausrüstung zum Halten der Drehwinkel (α, β) in fast gleicher Größe hydraulische oder pneumatische Zylinder (80, 90) umfasst, die zwischen dem Verbindungswagen (3) und den Wageneinheiten (1, 2), die damit verbunden sind, installiert sind, wodurch sich mindestens ein Zylinder (80), der auf einer Seite des Verbindungswagens positioniert ist, und mindestens ein Zylinder (90), der auf der anderen Seite des Verbindungswagens (3) positioniert ist, auf gegenüberliegenden Seiten der vertikalen zentralen Längsebene (B) des Schienenfahrzeugs befinden.

6. Schienenfahrzeug nach Anspruch 1, **dadurch gekennzeichnet, dass** die Ausrüstung zum Halten der Drehwinkel (α, β) in fast gleicher Größe elektromechanische Mechanismen umfasst, die zwischen dem Verbindungswagen (3) und den Wageneinheiten (1, 2, 11, 12, 13), die damit verbunden sind, installiert sind, wodurch sich ein Mechanismus, der auf einer Seite des Verbindungswagens (3) positioniert ist, und ein Mechanismus, der auf der anderen Seite des Verbindungswagens (3) positioniert ist, auf gegenüberliegenden Seiten der vertikalen zentralen Längsebene (B) des Schienenfahrzeugs befinden.

7. Schienenfahrzeug nach einem der vorhergehenden Ansprüche, **dadurch gekennzeichnet, dass** die Wageneinheiten ohne Drehgestelle auf beiden Seiten des Verbindungswagens (3) gestützt sind, und Wageneinheiten mit Drehgestellen mit den Wageneinheiten ohne Drehgestelle verbunden sind.

8. Schienenfahrzeug nach einem der Ansprüche 1 bis 6, **dadurch gekennzeichnet, dass** der Verbindungswagen (3) mit den Wageneinheiten (1, 2, 12, 13), die mit Drehgestellen (4, 5) versehen sind, verbunden ist.

9. Schienenfahrzeug nach einem der Ansprüche 1 bis 6, **dadurch gekennzeichnet, dass** zwischen den Verbindungswagen (3) eine Wageneinheit (11) ohne ein Drehgestell gestützt ist und die anderen Enden der Verbindungswagen mit Wageneinheiten (1, 2) mit Drehgestellen verbunden sind, nach diesen möglicherweise weitere Wageneinheiten mit und/oder ohne Drehgestelle.

## Revendications

1. Véhicule ferroviaire, en particulier un tramway à plancher surbaissé, comprenant une voiture de connexion (3) connectée entre deux unités de voiture (1, 2, 11, 12, 13) et supportant ces unités de voiture et étant supportée sur une unité de bogie (6) d'elle-même, **caractérisé en ce que** la voiture de connexion (3) est supportée sur son unité de bogie (6) de sorte qu'elle pivote sensiblement librement autour d'un pivot (T) dans un plan horizontal, et l'équipement (7 ; 70) est agencé entre la voiture de connexion (3) et les unités de voiture (1, 2, 11, 12, 13) connectées à cette dernière pour maintenir des angles de rotation horizontaux (α, β) entre les deux unités de voiture connectées (1, 2, 11, 12, 13) et la voiture de connexion (3) presque égaux du point de vue de la grandeur.

2. Véhicule ferroviaire selon la revendication 1, **caractérisé en ce que** l'équipement pour maintenir les angles de rotation (α, β) presque égaux du point de vue de la grandeur se compose d'un mécanisme de levier (7) comprenant une première barre (8) connectée, par articulation, à une unité de voiture (1, 11, 12), une second barre (9) connectée, par articulation, à une autre unité de voiture (2, 11, 13) et une poulie folle (10) montée, de manière pivotante sur la voiture de connexion (3), la première barre (8) et la seconde barre (9) étant articulées sur les côtés opposés d'un pivot (A) de la poulie folle à des distances sélectionnées du pivot (A), et moyennant quoi la première barre (8) et la seconde barre (9) ainsi que la poulie folle (10) sont positionnées, par rapport à un plan central vertical longitudinal (B) du véhicule ferroviaire, du même côté du véhicule ferroviaire.

3. Véhicule ferroviaire selon la revendication 2, **caractérisé en ce que** la première barre (8) et la seconde barre (9) sont différentes du point de vue de la longueur, et **en ce que** la poulie folle (10) est montée, de manière pivotante sur un côté avant ou arrière d'un pivot de l'unité de bogie (6) de la voiture de connexion (3).

4. Véhicule ferroviaire selon la revendication 2, **caractérisé en ce que** la première barre et la seconde barre sont identiques en longueur, et **en ce que** la poulie folle (10) est montée de manière pivotante à côté du pivot de l'unité de bogie (6) de la voiture de connexion (3).

5. Véhicule ferroviaire selon la revendication 1, **caractérisé en ce que** l'équipement pour maintenir les angles de rotation (α, β) presque égaux en magnitude comprend des cylindres hydrauliques ou pneumatiques (80, 90) installés entre la voiture de connexion (3) et les unités de voiture (1, 2) raccordées à cette dernière, moyennant quoi au moins un cylindre (80) positionné d'un côté de la voiture de connexion et au moins un cylindre (90) positionné de l'autre côté de la voiture de connexion (3), résident sur les côtés opposés du plan central vertical longitudinal (B) du véhicule ferroviaire.

6. Véhicule ferroviaire selon la revendication 1, **caractérisé en ce que** l'équipement pour maintenir les angles de rotation (α, β) presque égaux du point de vue de la grandeur comprend des mécanismes électromécaniques installés entre la voiture de connexion (3) et les unités de voitures (1, 2, 11, 12, 13) raccordées à cette dernière, moyennant quoi un mécanisme positionné d'un côté de la voiture de connexion (3) et un mécanisme positionné de l'autre côté de la voiture de connexion (3) résident sur les côtés opposés du plan central vertical longitudinal (B) du véhicule ferroviaire.

7. Véhicule ferroviaire selon l'une quelconque des revendications précédentes, **caractérisé en ce que** les unités de voiture sans les bogies sont supportées des deux côtés de la voiture de connexion (3) et les unités de voiture avec les bogies sont connectées aux unités de voiture sans les bogies.

8. Véhicule ferroviaire selon l'une quelconque des revendications 1 à 6, **caractérisé en ce que** la voiture de connexion (3) est connectée aux unités de voiture (1, 2, 12, 13) prévues avec les bogies (4, 5).

9. Véhicule ferroviaire selon l'une quelconque des revendications 1 à 6, **caractérisé en ce qu'**entre deux voitures de connexion (3), une unité de voiture (11) sans bogie est supportée et les autres extrémités des voitures de connexion sont connectées à des unités de voiture (1, 2) avec des bogies, et après celles-ci, éventuellement à plus d'unités de voiture avec et/ou sans bogies.
